# EUROPEAN PATENT SPECIFICATION

(11) **EP 1 375 875 B1**
(45) Date of publication and mention of the grant of the patent: **19.08.2009**
(21) Application number: 02714489.8
(22) Date of filing: 05.04.2002
(51) Int. Cl.: F02D 19/12, F02B 47/02

(54) **METHOD OF OPERATING RECIPROCATING INTERNAL COMBUSTION ENGINES, AND SYSTEM THEREFOR**
VERFAHREN UND SYSTEM ZUR REGELUNG EINER BRENNKRAFTMASCHINE
PROCEDE DE FONCTIONNEMENT DE MOTEURS ALTERNATIFS A COMBUSTION INTERNE ET SYSTEME ASSOCIE

(30) Priority: 06.04.2001 JP 2001109177; 31.08.2001 JP 2001264190; 31.01.2002 JP 2002023962
(43) Date of publication of application: 02.01.2004
(73) Proprietor: MITSUBISHI HEAVY INDUSTRIES, LTD., Tokyo 100-8315 (JP)
(72) Inventor: MITSUHASHI, Masato, Mitsubishi Heavy Ind. Ltd., Yokohama-shi (JP); ITOU, Kuninori, C/O Mitsubishi Heavy Ind. Ltd., Yokohama-shi (JP); YUKI, Akihiro, C/O Mitsubishi Heavy Ind. Ltd., Yokohama-shi (JP); ISHIDA, Hiroyuki, C/O Mitsubishi Heavy Ind. Ltd., Nagasaki-shi (JP); SHIMADA, Takafumi, C/O Mitsubishi Heavy Ind. Ltd., Yokohama-shi (JP)
(74) Representative: HOFFMANN EITLE
(86) International application number: PCT/JP2002/003430
(87) International publication number: WO 2002/084092

(56) References cited:
- EP-A- 0 593 793
- DE-A- 19 810 933
- GB-A- 2 196 384
- JP-A- 2000 018 101
- JP-A- 2002 138 871
- US-A- 3 978 661
- US-A- 4 589 377
- US-A- 6 010 544
- US-B1- 6 170 441
- US-B1- 6 213 104
- US-B1- 6 360 701

## Description

### TECHNICAL FIELD

The present invention relates to a method of operating an internal combustion engine and a system thereof for increasing output, improving efficiency, and reducing exhaust emission by the injection of sub -or super-critical water into the cylinder of the internal combustion engine with the quantity of fuel injection increased and maximum combustion temperature suppressed to a conventional level.

### PRIOR ART

Medium/large reciprocating internal combustion engines are widely introduced to the market for the propulsion of ships, general industry, business use, etc. owing to their high cost effectiveness. However, demands of users for cost effectiveness and eco-friendliness have become increasingly severe, and further reduction in cost per unit output power, fuel consumption, and harmful emissions are desired. The cost down by increasing the power of an internal combustion engine (compact and high power) has become a social demand from the view point of LCA(Life Cycle Assessment).

There has been a method of increasing the efficiency and output of an internal combustion engine by combining the internal combustion engine with a steam turbine to allow the steam turbines to operate under bottoming cycle, so-called series-combined system. Mainly the system using a gas turbine as internal combustion engine has been in practical use. In the system like this, a part of the heat of the exhaust gas of the internal combustion engine is utilized, so thermal efficiency is improved, however a steam turbine is needed in addition to the internal combustion engine resulting in not-compactness, which does not always realize the reduction in weight, space, and cost per unit output power.

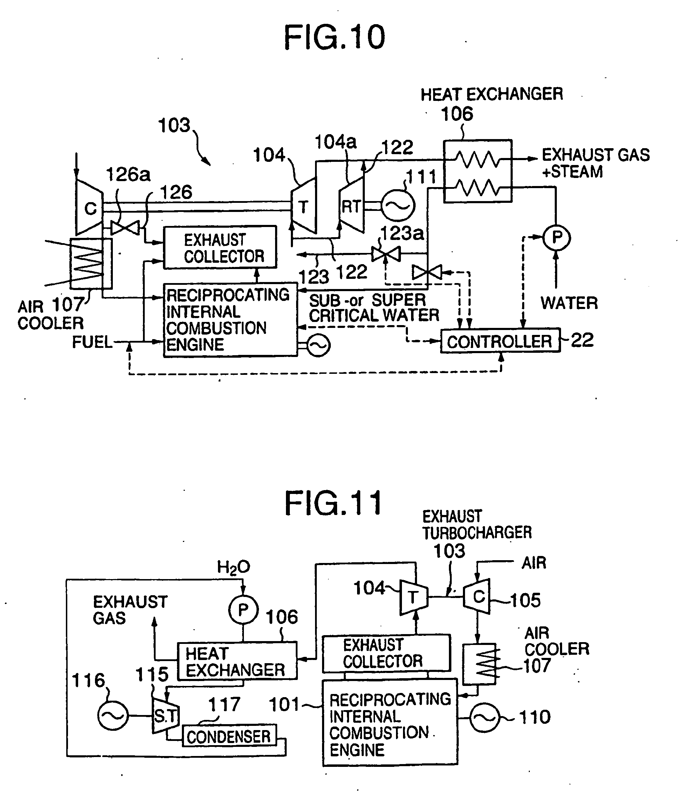

An example of said series-combined system using a reciprocating internal combustion engine is shown in FIG.11, in which the exhaust gas from the exhaust turbine 104 of the exhaust turbocharger 103 of a turbo-charged reciprocating internal combustion engine 101 is introduced to a heat exchanger 106. The air compressed by the compressor 105 of said exhaust turbocharger 103 is supplied to the cylinder of the engine 101 byway of an air cooler 107. Said heat exchanger is supplied with water through a water pump P, and the water is heated by the exhaust gas from said turbine in the heat exchanger to be made into super heated steam and the steam is sent to the steam turbine 115. The super heated steam expands in the steam turbine 115 which drives an electric generator 115. The wet steam lowered in temperature is cooled in a condenser 117 to be condensed to liquid water which is again sent to the heat exchanger through the pump P.

So-called Cheng cycle was disclosed in U.S.Patent 3978661 or Japanese Patent 54-34865 as Parallel-Compound Dual-Fluid Heat Engine, in which the steam generated in the exhaust gas boiler is injected into the combustor of a gas turbine for increasing output and improving thermal efficiency. This cycle aims to increase output and thermal efficiency by injecting into the combustor of the gas turbine the steam generated through heat exchange with the exhaust gas of the gas turbine, the injected steam being mixed with the combustion gas and made into a super-heated steam in the combustion chamber, the mixed fluid of the combustion gas with the steam is supplied as a working fluid to the gas turbine or expander. The heat energy of the working fluid is carried on mainly by the super-heated steam and the part of heat energy carried on by the combustion gas is smaller than that of the super-heated steam. That is, the energy of the fuel is utilized mainly to produce the super-heated steam, so said combustor is a kind of boiler which produces super-heated steam by direct contact of the combustion gas with the steam.

A combined Diesel-Rankine cycle reciprocating engine is disclosed in WO99/37904, in which the steam of temperature of preferably 580 °C or lower and pressure of 18 MPa or lower generated by heating the cooling water of the engine and combustion air through heat-exchanging with the exhaust gas, is injected into the cylinder before the fuel injected into the cylinder ignites so that the steam does not interfere with the injected fuel.

An art is disclosed in Japanese Patent Application Publication No. 6-137218, in which water solution of caustic potash is added to and mixed with diesel engine fuel, pressurized and heated to high pressure and temperature above the critical pressure of water to combine the sulfur in the fuel with the caustic potash, and the mixture is injected into the cylinder to be burned. However, although the property of critical water is used in the art mentioned above, the critical water is used for separating the sulfur in heavy oil by combining the sulfur with the caustic potash not for reducing NOx and CO. The mixing of the water solution into fuel may cause failed self-ignition and reduction in output.

Particularly, for medium/large diesel engines, it is strongly desired to reduce NOx to the last extremity for the sake of reducing the cost for denitration, and to largely improve thermal efficiency for reducing CO₂.

US 6,170,441 discloses an engine with a means for injecting a supercritical mixture of fuel and water into the cylinder of the engine. DE 198 10 933 discloses an internal combustion engine. These documents were cited as relevant to the present invention during examination of this patent.

### SUMMARY OF THE INVENTION

The present invention intends to increase output concurrent with the improvement in thermal efficiency and reduction in emission by injecting sub- or super-critical water into the cylinder of an reciprocating internal combustion engine. The obj ect of the present invention is to increase output and output without the modification in main components of the reciprocating internal combustion engine and without the necessity of providing a steam turbine, etc. as is the case with said series-combined system.

To attain the object mentioned above, according to the present invention, an internal combustion engine in which liquid or gaseous fuel such as petroleum group fuel, hydrogen, natural gas, alcohol, etc. is burned and the combustion gas works as working fluid, is operated in a method defined according to claim 1.

It is well known that NOx can be reduced by lowering the combustion temperature through injecting water or steam into the intake air pipe or cylinder of a reciprocating internal combustion engine. The critical point of water (H₂O) is 374.1 °C in temperature and 22.1 MPa in pressure. In critical state, there is no difference between the liquid phase and vapor phase and molecules in the critical state behave like in the vapor phase though the density thereof is the same as that of the liquid state. The physical and chemical properties widely change near the critical point.

The present invention positively utilizes the properties of sub- or super-critical water. That is, the mutual solubility of sub- or super-critical water with carbon-hydride group fuel increases as the permittivity of sub- or super-critical water becomes as low as that of an organic solvent, and the formation of homogeneous phase of water mixed with fuel is easy due to increased diffusion constant of sub- or super-critical water. Accordingly, the number of points or region of local high combustion temperature decreases resulting in reduction in NOx generation. Further, sub- or super-critical water also forms a homogeneous phase with gases such as oxygen, so the fuel is efficiently oxidized, which is effective in reducing CO and smoke density(black smoke). Also, the existence of sub- or super-critical water increases ion product and the acid/alkali catalytic action is effected resulting in promoting the reduction of NOx and CO.

Super-critical water is H₂O with temperature and pressure above critical point, however, sub-critical water is not clearly defined. Sub-critical water is defined in the present invention as H₂O with pressure of between 18Kpa and 22.1MPa (critical pressure) and temperature of between 250 °C and 580 °C.

With a reciprocating piston type internal combustion engine in which the suction, compression, combustion, and exhaust stroke is determined according to crank rotation angles, the period from the start until the end of injection of said sub- or super-critical water is in the range from 90°BTC (before the top dead center) until 30 °ATC(after the top dead center), preferably in the range from 80°BTC until 0°(the top dead center), and more preferably in the range from 80 °BTC until before the fuel ignites in the combustion chamber and the injection ends at 5°BTC or just before.

However, if the start of injection of critical water is in the range of -90°∼ -10° from the top dead center, particularly -80°∼ -20°, more preferably -60°∼ -20° to -30°, the drop in pressure of the injected critical water due to its instantaneous expansion is small because the piston is in the later part of the compression stroke, so super- or sub-critical state of the injected critical water is maintained and said effect according to the invention is effectively attained.

The pressure and temperature in the cylinder varies with the position of piston, that is, with crank angle, on the other hand, it takes some time to inject sub- or critical water into the cylinder. Therefore, sub- or super-critical water must be injected into the cylinder with the pressure higher than that in the cylinder.

If said sub- or super-critical water is injected when the pressure in the cylinder is relatively low before fuel is injected, the sub- or super-critical water is reduced to the steam of pressure and temperature near those in the cylinder, the action as sub- or super-critical water is lost, and the steam acts merely to increase the mass and specific heat of the working fluid. If it is injected when the pressure in the cylinder is high near the time of fuel injection start or during combustion, the sub- or super-critical water penetrate the air in the cylinder to come into collision with the spray of fuel, thereby it mixes with the fuel spray and activates combustion even though it lowers the temperature of the combustion flame.

Therefore, the start of injection of sub- or super-critical water is preferable to be the same as that of fuel or in the compression stroke before the fuel injection.

When wet water vapor is injected, it cools and quenches the flame as the latent heat of the liquid water in the wet vapor is large, and the combustion is inhibited. But, as sub-critical water near the critical point contains only very small quantity of liquid water, its latent heat is not large and the combustion is less affected. Therefore, if sub-critical water is injected near the start of fuel injection, it is preferable that its temperature is not far lower than thecriticaltemperature. The injected sub- or super-critical water rises in temperature as the combustion proceeds and mixes homogeneously with the fuel and air to promote combustion as mentioned before, and the generation of NOx, CO, etc. is suppressed.

Generally, the intake air pressure is about 0.4 MPa, its pressure is about 50 °C, and the maximum combustion temperature reaches 1600 °C∼ 2000 °C in an medium/large super-charged, inter-cooled engine of present day. The excess air ratio is as large as about 2.5 to keep the maximum combustion temperature within 2000 °C. By the injection of sub- or super-critical water in the cylinder according to the present invention, the combustion in the cylinder is activated, and the quantity of working fluid and its specific heat increases, so the heat absorption capacity increases. Therefore, even if the fuel injection quantity is increased so that the excess air ratio is smaller than 2.5, the maximum combustion temperature can be kept to be lower than 2000 °C. The output can be increased by the increased fuel input.

Here is proposed in claim 6 a system of a reciprocating internal combustion engine in which liquid or gaseous fuel such as petroleum group fuel, hydrogen, natural gas, alcohol, etc. is burned and the combustion gas works as working fluid.

Here, it is preferable that said means for producing sub- or super-critical water is an exhaust gas/H₂O heat exchanger provided downstream the exhaust turbine of the turbocharger of the super-charged reciprocating internal combustion engine.

Further, it is preferable that a control means is provided to adjust the flow rate of exhaust gas and the pressure of H₂O supplied to the heat exchanger for producing the sub- or super-critical water of said range of temperature and pressure.

It is preferable that a means for allowing the variable expansion ratio in the turbine of the exhaust turbocharger is installed as a means for controlling the temperature of said sub- or super-critical water by controlling the quantity of exhaust gas supplied to said heat exchanger.

It is also preferable that a bypass passage equipped with a bypass adjusting means is provided for supplying to the heat exchanger a part of the exhaust gas before it enters the exhaust turbine of the exhaust turbocharger, in order to control the temperature of said sub- or super-critical water.

Since said sub- or super-critical water can not be obtained during the period of low exhaust gas temperature, it is preferable that a second means for producing said sub- or super-critical water is provided in addition to said exhaust gas/ H₂O heat exchanger for injecting the sub- or super-critical water generated by said second means into the cylinder of the internal combustion engine at the start of operation of engine.

It is preferable that, when excessive sub- or super-critical water is generated by said means for generating sub- or super-critical water, a part of the sub- or super-critical water generated by said means for generating sub- or super-critical water is returned to the exhaust side of the engine and correct quantity of sub- or super-critical water is injected into the cylinder.

Further, it is preferable that fuel is supplied to the exhaust pipe of the engine located upstream said means for producing sub- or super-critical water to be burned in the exhaust pipe, more preferably that fuel and a part of the air compressed in the compressor of the exhaust turbo charger are supplied to the exhaust pipe of the engine located upstream said means for producing sub- or super-critical water to burn the fuel in the exhaust pipe.

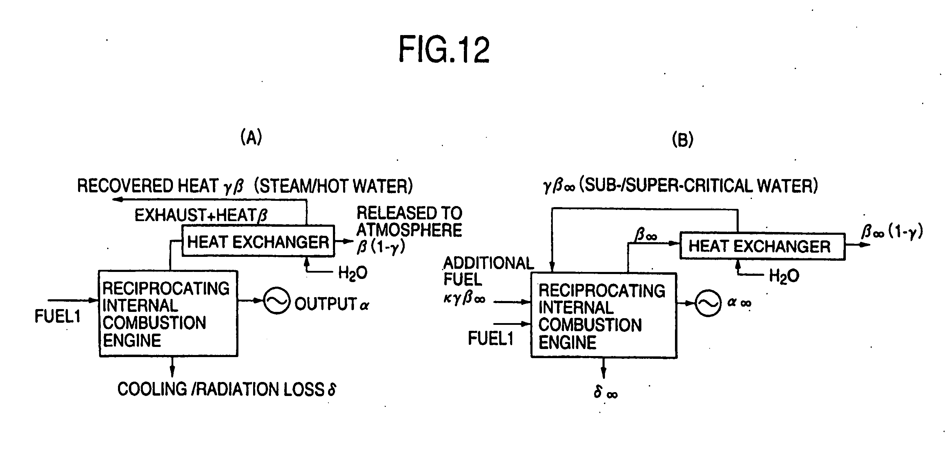

FIG.12 is a schematic representation comparing the shift of heat quantity in the feedback-compound system of the invention and in the conventional system in which the heat energy recovered through heat exchange with the exhaust gas is utilized as steam or hot water.

In the conventional system of FIG.12(A), assuming the heat supplied to the engine by fuel as 1, shaft output is α, cooling loss carried away by cooling water and the heat radiated from the surface of the engine is δ, and the heat of exhaust gas is β. A part of the exhaust heat γ β is the recovered heat energy recovered through heat exchange of the water (H₂O) supplied to the heat exchanger with the exhaust gas and carried by the steam or hot water generated in the heat exchanger, and β(1-γ) is released into the atmosphere as end exhaust gas.

In the system of the present invention of FIG.12(B), the water (H₂O) supplied to the heat exchanger is made into sub- or critical water having heat energy γ β ∞ through heat exchange with exhaust heat β ∞ and injected in the cylinder. In this case, the heat supplied to the engine by fuel is increased by κ γ β ∞ compared with the case in the conventional system to supply the heat of 1 + κ γ β ∞. This increase of fuel supply is done so that the maximum combustion temperature is about the same as that in the case with the conventional system.

That is, the mass of the working fluid in the cylinder is increased by the injection of the sub- or critical water into the cylinder, and the specific heat of the working fluid is increased as the specific heat of the sub- or critical water is larger than that of the air or combustion gas in the cylinder. So, if the amount of fuel supply is the same as that in the case with the conventional system, the maximum combustion temperature falls. Said increase of fuel supply is done to keep the maximum combustion temperature to about the same as that of the case with the conventional system, for example, at 1600 ∼ 2000 °C.

As a result, the shaft output is increased to α ∞, cooling/radiation loss also increases to δ ∞ , and the heat released to the atmosphere is δ ∞ (1-γ). Therefore, the shaft output increases to α ∞/α times, and the thermal efficiency of the engine increases to α ∞/α (1+ κ γ β ∞) times the conventional case.

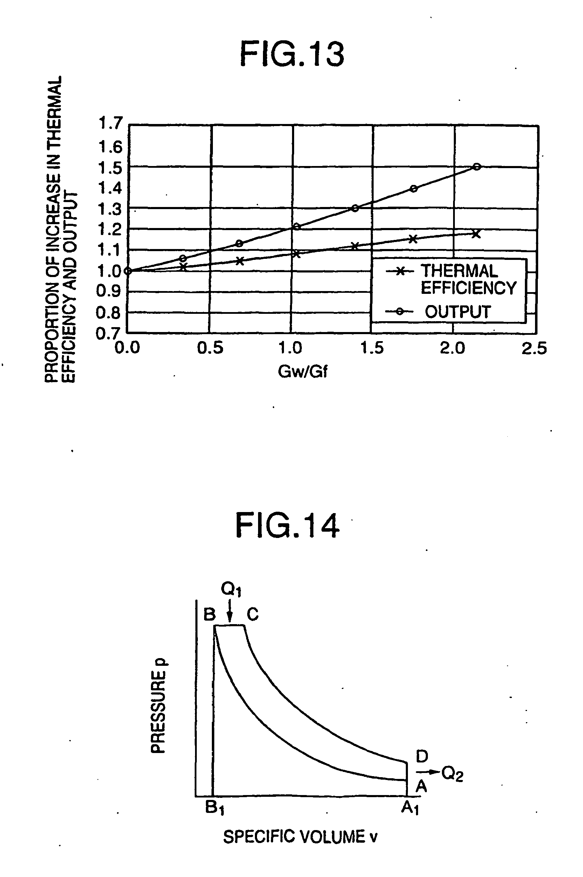

A result of calculation of the proportion of increase in output and thermal efficiency relative to the ratio of the injection quantity of sub- or super-critical water G_{w} to the injection quantity G_{f} of fuel under the condition of the same maximum combustion temperature, is shown in FIG.13.

In the system according to the present invention, fuel supply is increased as the injection quantity of sub- or super-critical water is increased so that the maximum combustion temperature is the same as that of the conventional system. As shown in FIG. 13, output and thermal efficiency increased with increased ratio of G_{w} to G_{f} under the condition of the same maximum combustion temperature with a conventional engine. The value of G_{w}/G_{f} is limited depending on the permissible maximum combustion pressure, because the quantity of working fluid in the cylinder increases with increased injection of sub- or super-critical water and accordingly the maximum combustion pressure increases. Therefore, the injection quantity of sub- or super-critical water is limited as to what extent the maximum combustion pressure is permitted. In the present invention, sub- or super-critical water is injected in the range of between 90 °BTC and ATC 30 °so that the excess air ratio at the maximum output is 1 - 2.5 with increased fuel supply.

In the system of the invention, the heat of κ γ β ∞, which is κ times the heat of γ β ∞ recovered from the exhaust heat of β ∞, is fed back to the engine in the form of sub- or super-critical water and additional fuel to be operated in a compound gas-steam cycle.

As the specific heat of the injected sub- or super-critical water is about 2 times higher than that of the combustion gas (the mixture of the air with the burned fuel in the cylinder), the combustion heat is effectively absorbed by the injected sub- or super-critical water. That is, the temperature rise when it receives the same heat per unit mass is about half or smaller than that of air or combustion gas, so fuel supply can be increased while keeping the combustion temperature to the same level as that of the conventional system.

The injected sub- or super-critical water expands in the cylinder together with the combustion gas to push down the piston to increase output of the engine.

The injected sub- or super-critical water operates in the reciprocating cycle of high maximum temperature and high maximum pressure, so the cycle efficiency is higher than that of the steam turbine of the conventional system.

Compared to Rankine cycle realized in a steam turbine in which the steam temperature is generally 600 °C or lower and pressure is several MPa to ten and several MPa at most, the sub- or super-critical water injected into the cylinder of the reciprocating internal combustion engine operates in the cycle in which the maximum temperature is 1600 °C or higher and maximum pressure is 20 ∼ 25 MPa in the case with said latest-type high output engine, so the cycle efficiency of the sub- or super-critical water part of the working fluid is high similar to the proper cycle efficiency of the reciprocating internal combustion engine. Thus, the output is increased with increased fuel supply and increased thermal efficiency.

The thermal efficiency of an internal combustion engine increases with increasing combustion temperature, but there is limitation in point of view of thermal load to the constituent component of the engine and of NOx generation, so it is required to keep the combustion temperature as low as possible.

Water generated from the fuel is contained in the combustion gas in a state of high temperature and high pressure, and its amount is about 8% of the combustion gas when the fuel is burned with theoretical air/fuel ratio. Generally, the excess air ratio of the latest-type high output engine is about 2.5 at the maximum output, so the excess air ratio is about 3.2% at the maximum output. By increasing the mass and specific heat of the working fluid through injecting sub- or super-critical water into the cylinder, more fuel can be burned and more output can be drawn from an engine of the same size and weight as that of a conventional engine.

The output of a compression ignition internal combustion engine has been increased year by year. For example, the maximum cylinder pressure of a medium type diesel engine of cylinder bore of 300 - 450 mm and rotation speed of 400 ∼ 500 rpm reaches 20 MPa, and further engines of 25 MPa maximum cylinder pressure are laid on the table for consideration.

Generally, the maximum combustion temperature increases with increasing maximum pressure in the cylinder and also NOx increases. Mechanical strength has been increased against increasing maximum cylinder pressure by getting the technique such as structure analysis into full use. Coping with increase thermal load due to increased maximum combustion temperature includes more difficult problems. According to the present invention, the maximum combustion temperature is kept to the same as that of the conventional engine which is 1600 ∼ 2000 °C and the output is increased. As a result, an engine with small weight, size, and cost per unit output can be obtained.

As said sub- or super-critical water is injected into the cylinder in the halfway through the compression stroke center or after the top dead center, less work consumed to compress the sub- or super-critical water than when water or steam is injected in the intake pipe (when said sub- or super-critical water is injected in the compression stroke, the pressure in the cylinder increases to increase compression work, but this increase of compression work is smaller than when water or steam is injected in the intake pipe).

The specific heat of super-heated steam is larger than that of air and combustion gas, therefore, the specific heat ratio, i.e. adiabatic coefficient of super-heated steam is smaller than that of air and combustion gas. The smaller the specific heat ratio of the working fluid, the larger the expansion work exerted on the piston per unit mass of the working fluid, so the higher the thermal efficiency. Here super-heated steam means the steam higher in temperature than saturated steam. Therefore, the injection of sub- or super-critical water has also an effect of increasing thermal efficiency by increasing the specific heat ratio of the working fluid.

The steam possible to be generated by the heat of the exhaust gas of the conventional internal combustion engine is low in energy (energy level of steam for utility use), and its amount is about 2.5 to 3 times the injected fuel mass. The feedback-compound system of the present invention makes it possible to generate sub- or super- critical water by the heat of the exhaust gas, since the amount and specific heat of the exhaust gas is increased due to the injection of sub- or super- critical water and the heat released in the heat exchanger is larger per the same temperature fall. The system is particularly effective with a turbo-charged reciprocating internal combustion engine, for its working fluid is increased by turbo-charging.

It is suitable that an independent turbine is provided in addition, the turbine is supplied with the exhaust gas released from the cylinder of the engine to drive a generator or so on connected to the turbine, and the exhaust gas from the turbine is introduced to said heat exchanger. With this system, the exhaust gas energy is large, so it is suitable to absorb the excessive exhaust energy by said independent turbine when the exhaust energy is larger than necessary for driving the turbocharger to supply air to the engine.

### BRIEF DESCRIPTION OF THE DRAWINGS

FIG.1(A) is the representation of a basic configuration (1) showing the locations of the fuel injection nozzle and sub- or super-critical water injectionnozzle of a diesel engine injected with sub- or super-critical water of the embodiment according to the present invention.
FIG.1(B) is the representation of a basic configuration (2) showing the locations of the fuel injection nozzle and sub- or super-critical water injection nozzle of a diesel engine injected with sub- or super-critical water of the embodiment according to the present invention.
FIG.2 is a schematic representation of the system of the diesel engine injected with sub- or super-critical water.
FIG.3 is a diagram showing the valve timing of a 4-stroke cycle diesel engine.
FIG.4 is a schematic representation of a first embodiment of the feedback-compound system according to the present invention.
FIG.5 is a schematic representation of a second embodiment of the feedback-compound system according to the present invention.
FIG.6 is a schematic representation of a third embodiment of the feedback-compound system according to the present invention.
FIG.7 is a schematic representation of a fourth embodiment of the feedback-compound system according to the present invention.
FIG.8 is a schematic representation of a fifth embodiment of the feedback-compound system according to the present invention.
FIG.9 is a schematic representation of a sixth embodiment of the feedback-compound system according to the present invention.
FIG.10 is a schematic representation of a seventh embodiment of the feedback-compound system according to the present invention.
FIG.11 is a schematic representation of an example of conventional series-combined system.
FIG.12 is a schematic representation to explain the shift of heat quantity in the conventional system and in the feedback-compound system of the invention.
FIG.13 is a graph showing the proportion of increase in output and thermal efficiency relative to the ratio of the injection quantity of sub- or super-critical water G_{w} to the injection quantity G_{f} of fuel.
FIG.14 is a p-v diagram of diesel cycle.
FIG.15 is a T-s diagram for explaining diesel cycle and the cycle that the sub- or super-critical water injected into the cylinder operates in the cylinder.
FIG.16 is a graph showing the improvement in output (improvement in thermal efficiency) due to sub- or super-critical water injection relative to the injection temperature thereof.
FIG. 17 is a graph showing the reduction in NOx in the exhaust gas due to sub- or super-critical water injection relative to the injection temperature thereof.
FIG.18 is a graph showing the reduction in color density of the exhaust gas due to sub- or super-critical water injection relative to the injection temperature thereof.
FIG. 19 is a graph showing the reduction in CO in the exhaust gas due to sub- or super-critical water injection relative to the injection temperature thereof.
FIG.20 is a graph showing the improvement in output (improvement in thermal efficiency) due to sub- or super-critical water injection relative to the injection timing thereof.
FIG.21 is a graph showing the reduction in NOx in the exhaust gas due to sub- or super-critical water injection relative to the injection timing thereof.

### DETAILED DESCRIPTION OF THE PREFERRED EMBODIMENTS

A preferred embodiment of the present invention will now be detailed with reference to the accompanying drawings. It is intended, however, that unless particularly specified, dimensions, materials, relative positions and so forth of the constituent parts in the embodiments shall be interpreted as illustrative only not as limitative of the scope of the present invention.

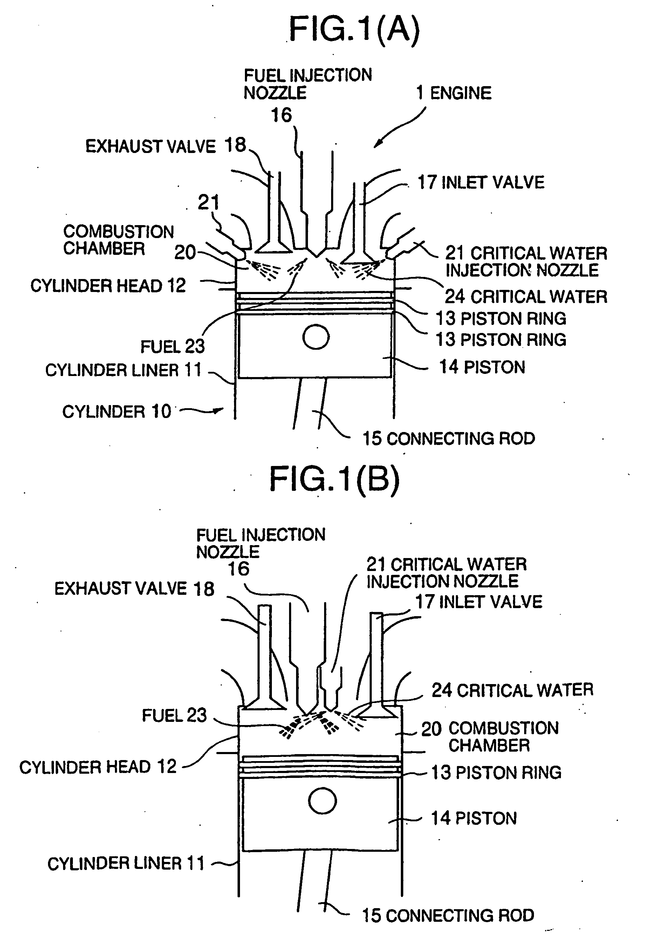

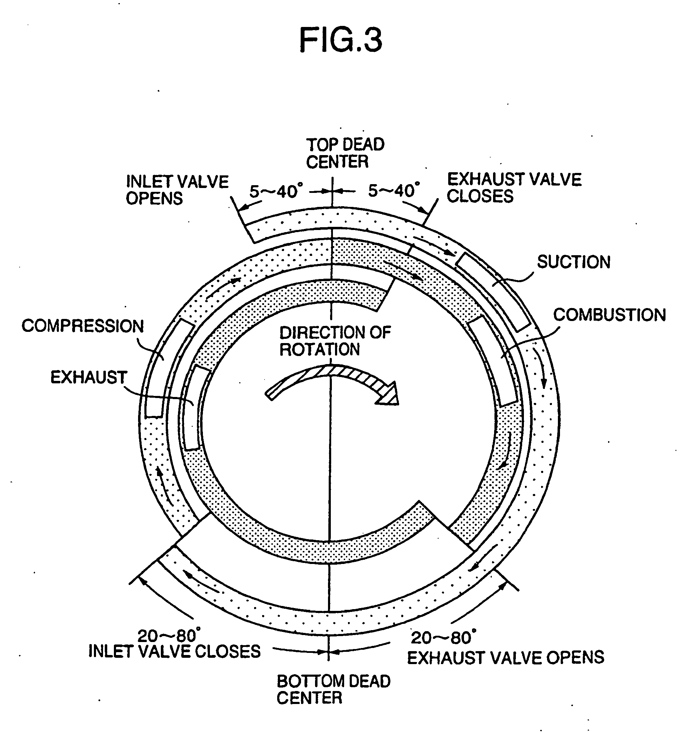

FIG.1(A), (B) show examples of configuration around the combustion chamber of a reciprocating internal engine, specifically a 4-stroke cycle diesel engine, of the embodiment according to the present invention. The engine 1 comprises a cylinder 10 including a cylinder liner 11 and a cylinder head 12, a piston 14 equipped with piston rings 13, and a connecting rod 15 for transmitting the reciprocating force of the piston 14 to the load by way of a crank shaft not shown in the drawing. A fuel injection nozzle 16 is equipped in the center part of the cylinder head 12, and at both sides of the nozzle are provided an inlet valve 17 for introducing intake air into the cylinder 10 and an exhaust valve 18 for letting out exhaust gas. The basic processes of suction, compression, combustion and expansion, and exhaust are performed per 2 rotations of the crankshaft as shown in FIG.3 of valve timing diagram.

As shown in FIG.3, the inlet valve opens in the range of -5°∼ -40° from the top dead center and closes in the range of +20°∼ +80° from the bottom dead center, and the air taken-in in the cylinder 12 is compressed as the piston moves upward.

The compressed air rises in temperature to a point above the self-ignition temperature of the injected fuel. When the fuel is injected from the injection nozzle 16 near the end of compression stroke (at about -5°∼ -20° from the top dead center), the fuel is heated by the high temperature of the compressed air and ignites to burn, temperature and pressure increase rapidly, and the piston 14 is pushed down toward the bottom dead center after it passes the top dead center.

The exhaust valve 18 opens before the piston 14 reaches the bottom dead center of combustion and expansion stroke (at about -20°∼ -80° from the bottom dead center), the combustion gas blows out of the cylinder 10 by the pressure of itself, and then the gas is pushed out by the piston 14 as it moves upward.

A 4-stroke cycle engine of the configuration like this is well known.

The driving of the fuel injection nozzle 16 and opening/closing of the inlet valve 17 and exhaust vale 18 are done by means of timing gears and cams driven by the rotation of the crankshaft not shown in the drawings.

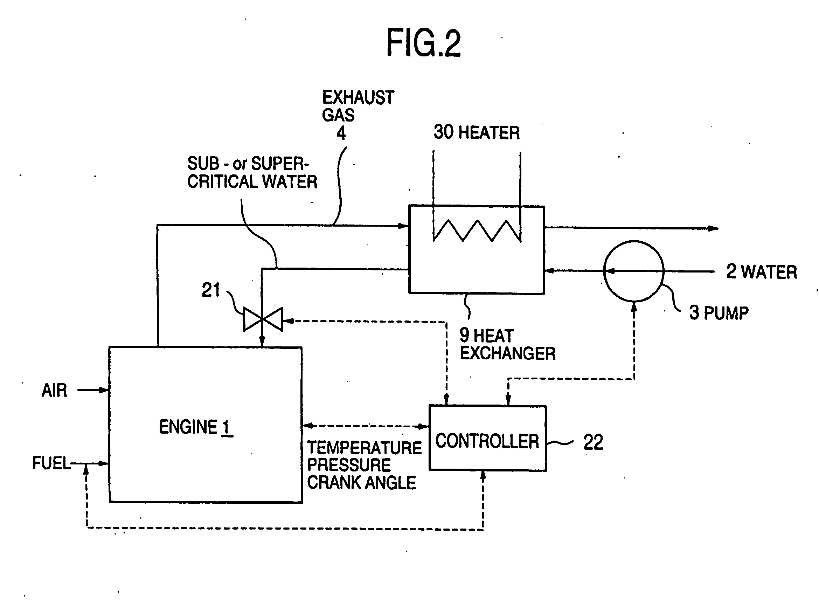

A sub- or super-critical water injection nozzle or nozzles 21 are provided in the upper part of the combustion chamber 20. The opening/closing of the nozzle or nozzles 21 may be done by means of timing gears and cams driven by the rotation of the crankshaft as is the case with the inlet/exhaust valve or may be done by the medium of a controller 22(see FIG.2) which control the injection timing by detecting the pressure and temperature in the cylinder and the rotation angle of the crankshaft.

It is suitable to select the timing of sub- or super-critical water injection, the location of the critical water injection nozzle 21, and the diameter and direction of the injection hole thereof so that the injected fuel contacts with the particles of the critical water expanded in the combustion chamber, in other word, so that the critical water interferes with the fuel spray.

For example, in FIG.1(A), the fuel injection nozzle 16 is provided in the center part of the combustion chamber 20 formed in the upper part of the cylinder, and the sub- or super-critical water injection nozzles 21 are provided so that the injection hole or holes thereof incline and direct toward the center side of the cylinder.

In this case, the injection nozzles 21 are provided remote from each other because they are located sandwiching the inlet and exhaust vale 17, 18, so it is required that the injection velocity of sub- or super-critical water is so determined that the sub- or super-critical water injected from the injection nozzles 21 interfere with the fuel spray in the combustion chamber. Specifically, it is suitable to increase the injection velocity with small diameter of injection hole or holes, that is, to increase the injection pressure of critical water.

In FIG.1(B), the critical water injection nozzle 21 and fuel injection nozzle 16 are located in the center part of the combustion chamber 20 adjacent to each other, the distance between them is small, so the sub- or super-critical water injected from the injection nozzle 21 interferes sufficiently with the fuel spray injected into the combustion chamber 20.

FIG.2 is an embodiment of the system in which the engine 1 is equipped with devices for injecting critical water.

In the embodiment, water 2 to be supplied is pressurized to 18 MPa or higher, preferably 22 MPa or higher, then heated to 250 °C or higher, preferably 374 °C or higher by a heat exchanger 9 in which a heater 30 is provided in addition.

It is preferable to pressurize the water to 35 MPa or lower, for pressurizing to unnecessarily high pressure causes increase of power for pressurizing water.

In this embodiment, the heater 30 in which high temperature steam flows is provided in the heat exchanger 9 to heat the water together with the exhaust gas 4 of the engine 1. However, when the injection quantity of sub- or super-critical water increases, the heat energy of the exhaust gas increases, therefore sub- or super-critical water may be generated by heating the water only by the exhaust gas.

Said controller 22 controls the injection quantity of fuel, sub- or super-critical water, and the injection timing of the sub- or super-critical water so that the excess air ratio at the maximum output is 1 - 2.5.

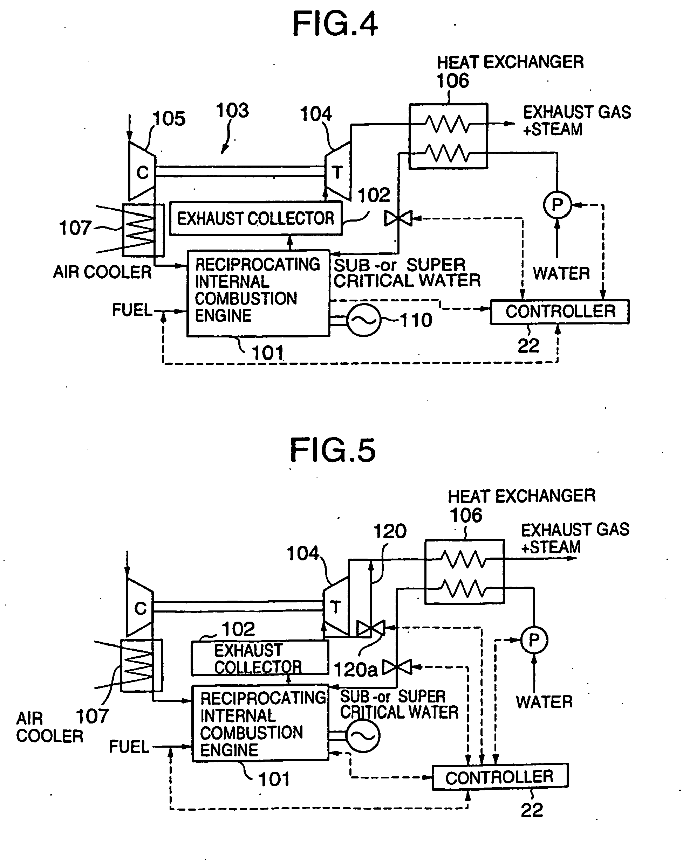

FIG.4 shows a schematic configuration of a first embodiment of the system(feedback-compound system) according to the present invention. In FIG.4, the exhaust gas flowing out from an exhaust collector 102 of a reciprocating internal combustion engine 101 is introduced to the turbine 104 of a turbocharger 103. The exhaust gas flowing out from the turbine 104 is then introduced to a heat exchanger 106. The water pressurized to 18 MPa or higher by the water pump P is fed to the heat exchanger 106, and the pressurized water is heated through heat exchange with the exhaust gas from the turbine 104 to be made into sub- or super-critical water to be injected into the cylinder of the engine 101.

The air pressurized by the compressor 105 connected with the turbine 104 is cooled by passing through an air cooler 107 and introduced into the cylinder of the engine 101. Reference numeral 110 denotes a machine to be driven by the engine 101 such as generator, propeller, etc. The end exhaust gas after heat exchange with the water in the heat exchanger 106 is released to the atmosphere. In the end exhaust gas is contained the water supplied by the pump P in the state of the same temperature and pressure with the end exhaust gas.

The controller 22 adjusts the outlet area of turbine nozzles (not shown in the drawing) of the turbine 104 to adjust the expansion ratio in the turbine and the pressure of the water supplied to the heat exchanger for controlling the temperature and pressure of said sub- or super-critical water to the range cited before in addition to the function explained with reference to FIG.2.

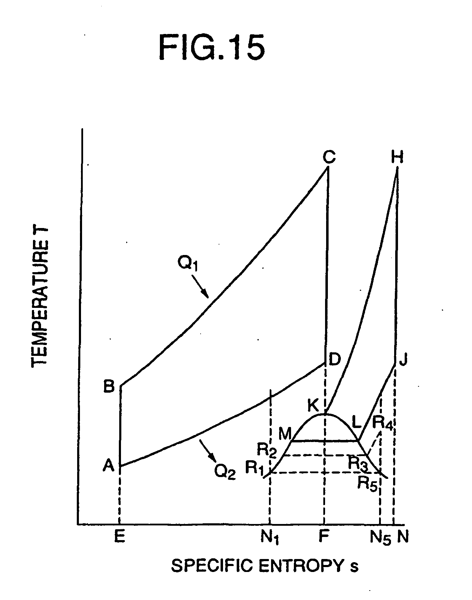

Here, the operation of feedback-compound cycle according to the present invention will be explained. FIG.14 shows a p-v diagram of diesel engine, FIG.15 shows a T-s diagram for explaining the feedback-compound cycle. Both diagrams show idealized cycle diagrams for the convenience of explanation.

In FIG.14, the pressure of the air in the cylinder rises fromAto B by adiabatic compression, expands to C under constant pressure while receiving the combustion heat Q₁ of injected fuel, the pressure falls from C to D by adiabatic expansion, and the combustion gas is exhausted out of the cylinder to release the exhaust heat Q₂, and fresh air is introduced during D to A. The exhaust and suction stroke is omitted in the drawing.

Area B₁BCDAA₁B₁ is the expansion work the working fluid exerted on the piston, area B1BAA1B1 is the compression work the piston exerted on the working fluid, and area ABCDA, the difference between both areas, is the indicated output.

In FIG. 15, the cycle of FIG. 14 is represented in a T-s diagram, mark A, B, C, D in both diagrams corresponds with that of FIG . 14 respectively. In FIG.15, area EABCDEF is the received heat Q₁, area EADFE is the released heat Q₂, and area ABCD is the indicated output expressed in thermal unit. For convenience sake, the cycle done by the sub- or super-critical water injected into the cylinder and contained in the working fluid is depicted in the right side separately in FIG.15, and A-B-C-D represents the cycle done by the working fluid excluding the sub- or super-critical water. As a matter of course, the sub- or super-critical water performs the cycle together with the air and fuel as compound working fluid after it is injected into the cylinder. It is only for the sake of expediency to explain the effect of the sub- or super-critical water in the compound cycle that the cycle done by the sub- or super-critical water is depicted separately.

In the lower right in FIG. 15 is depicted the saturated liquid line and saturated vapor line of water, the scale of the abscissa indicating specific entropy of water is arbitrarily determined and irrelevant to that for the cycle ABCD. Mark K indicate critical point, namely 373.1 °C and 22.1 MPa.

In the case of the series combined system of a reciprocating internal combustion engine of FIG.11, a part of the heat Q₂ released from the cylinder is utilized in the turbine 104 of the turbocharger 103, and the remaining heat energy of the exhaust gas from the turbine 104 is used to generate super-heated steam R₄ from saturated water R₁ passing through R₂ and R₃, the super-heated steam R₄ expands in the turbine to fall in temperature to R₅, then condensed in the condenser 117 to be returned to R₁. The cycle R₁-R₂-R₃-R₄-R₅-R₁ is a Rankine cycle. The work obtained by the turbine is area R₁R₂R₃R₄R₅R₁. The temperature at R₄ is lower than that at D which is the temperature of the cylinder exhaust gas, because the temperature at R₄ is the temperature of the steam reached by heat exchange with the exhaust gas from the turbine and lower than the temperature of the exhaust gas from the turbine and accordingly lower than the temperature of the cylinder exhaust gas. Therefore, additional fuel may be supplied and burned to raise the temperature of the steam generated in the heat exchanger, but the inlet steam temperature of a steam turbine is generally limited to about 620 °C at highest.

In the case of the feedback-compound system according to the present invention, sub- or super-critical water is generated by the heat of the cylinder exhaust gas or turbine exhaust gas and injected into the cylinder. The sub- or super-critical water mixes with the working fluid in the cylinder and participates in the diesel cycle. For example, if critical water is injected into the cylinder, its state changes from point K passing through point H of which the temperature is the same as that of point c, and point J of which the temperature is the same as that of point D. From point J, it is exhausted out of the cylinder and passes through the exhaust corrector, turbocharger in the case of turbo-charged engine, and heat exchanger to be released to the atmosphere. In the cycle, the water supplied to the heat exchanger receives heat indicated by area N₁R₁MKHJNN₁ and releases heat indicated by area N₁R₁MLJNN₁. Therefore, the heat of the critical water injected into the cylinder utilized to exert work for the engine is area MKHJLM.

These areas indicate the heat per unit mass, and real heat is obtained by multiplying the mass of working fluid. (as the scale of entropy is not the same in both cases of air/fuel cycle and critical water cycle in FIG.15, those area can not be compared simply as the heat per unit mass.) The heat energy the cylinder exhausthas is the sumof areaEADFE and N₁R₁MLJNN₁. Exhaust gas having this heat or remaining heat after a part of this heat is consumed in the exhaust turbine is supplied to the heat exchanger. The distribution of this increased cylinder exhaust heat to the exhaust turbine and heat exchanger is determined by design specification according to the uses of the system, or can be adjusted by means for adjusting the temperature at the exit of the exhaust gas from the turbocharger.

In the case of the series combined system, the pressure at point R₄ is far lower than that of the maximum pressure C, or H in the cylinder and the temperature is lower than that of the turbine exhaust gas as mentioned before; and even if the turbine exhaust gas reheated by burning additional fuel, the inlet steam temperature of the steam turbine can not be raised as high as that in the cylinder of the diesel engine in point of view of heat resistance of turbine blade material; so the work obtained from Rankine cycle of the steam turbine is smaller than that obtained from the injected sub- or super-critical water operating in the diesel cycle together with air and fuel as can be recognized in FIG.15. As the specific heat ratio of steam is smaller than that of combustion gas, the steam in the working fluid has the effect of increasing thermal efficiency of the cycle.

FIG. 5 shows a schematic configuration of a second embodiment of the feedback-compound system according to the present invention. The different point from FIG.4 is that a part of the cylinder exhaust gas flowing out of the exhaust collector 102 to be introduced to the exhaust turbine 104, is bypassed to the heat exchanger 106 by way of a bypass pipe 120 equipped with a bypass control valve 120a. The temperature of the sub- or super-critical water generated by the heat exchanger 106 can be controlled by adjusting the bypass amount through the bypass pipe 120 by means of the controller 22. Although the driving power of the exhaust turbine is influenced by the bypass amount, the controlling is possible by adjusting the expansion ratio in the exhaust turbine by changing turbine nozzle area.

The controller 22 in FIG.5 adjusts the bypass amount of the cylinder exhaust gas by means of a bypass control valve 120a attached to the bypass pipe 120 to control the temperature and pressure of said sub- or super-critical water to the range cited before in addition to the function explained before with reference to FIG.2.

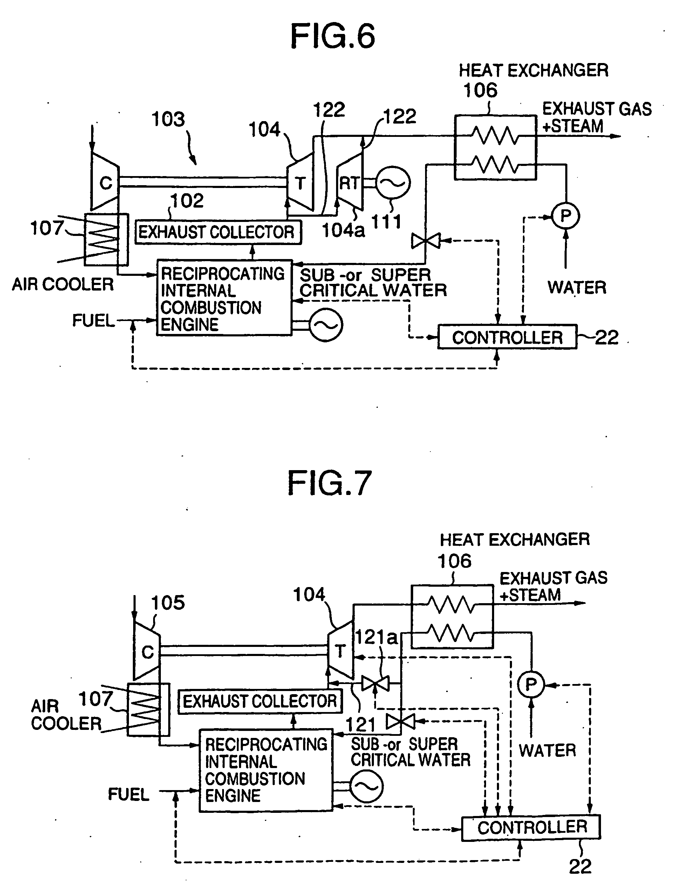

FIG. 6 shows a schematic configuration of a third embodiment of the system(feedback-compound system) according to the present invention. The different point from FIG.4 is that a part of the cylinder exhaust gas flowing out of the exhaust collector 102 to be introduced to the exhaust turbine 104, is introduced to an independent turbine 104a to which a generator 111 is connected, and the bypass amount is controlled by controlling the rotation speed of the independent turbine 104a.

In this system, cylinder exhaust gas with high energy is obtained, and the amount of the energy may be larger than necessary to drive the compressor of the turbocharger. In that case, a part of the cylinder exhaust gas is introduced to the independent turbine 104a to which the generator 111, is connected to absorb the excess energy. The exhaust gas from the independent turbine is introduced to the heat exchanger 106 for generating sub- or super-critical water together with the exhaust gas from the exhaust turbine of the turbocharger.

FIG . 7 shows a schematic configuration of a fourth embodiment of the system(feedback-compound system) according to the present invention. The different point from FIG.4 is that a part of the sub- or super-critical water generated in the heat exchanger 106, is bypassed to the exhaust turbine 104. In the system, it is a fundamental principle to keep the maximum combustion temperature the same as that of the conventional engine, and also the maximum combustion pressure must be limited to a certain value in accordance with the type or use of the engine. Therefore, there is proper amount of sub- or super-critical water to be injected depending on engines. The larger the injection amount of sub- or super-critical water, the larger the decrease in combustion temperature. So, the additional fuel to keep the same combustion temperature as that of the conventional engine increases, which increases the maximum pressure. The maximum pressure is limited to a certain value in accordance with engines, so there is a limit to the injection amount of sub- or super-critical water according to engines.

In the system, cylinder exhaust gas with high energy is obtained, and sub- or super-critical water may be generated in the heat exchanger 106 more than needed for injecting into the cylinder. In that case, a part of the sub- or super-critical water is bypassed to the exhaust turbine 104 by way of bypass pipe 121 equipped with a bypass control valve 121a, and required amount is injected into the cylinder. In this case, if it is necessary to adjust the increase of the output of the exhaust turbine due to the introduction of the bypassed sub- or super-critical water, the adjustment is possible by adjusting the expansion ratio by changing turbine nozzle area.

The controller 22 in FIG.7 controls the opening of the bypass control valve 121a attached to the bypass pipe 121 to control the rotation speed of the exhaust turbine 104 to control the temperature and pressure of said sub- or super-critical water to the range cited before in addition to the function explained with reference to FIG.4.

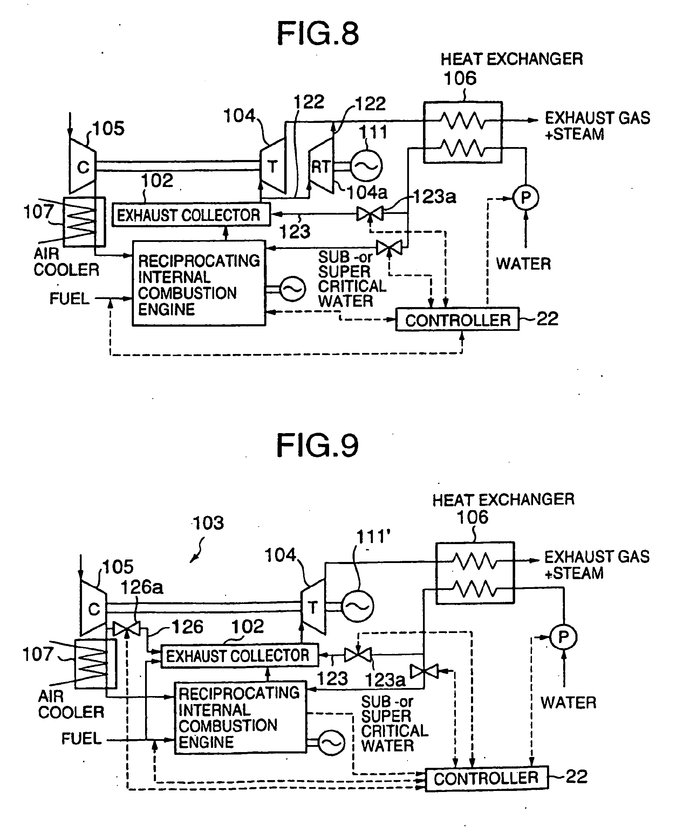

FIG.8 shows a schematic configuration of a fifth embodiment of the system(feedback-compound system) according to the present invention. This embodiment is different from that of FIG.6 in a point that a part of the sub- or super-critical water generated in the heat exchanger 106, is bypassed to the to the exhaust collector 102 by way of a bypass pipe 123 equipped with a control valve 123a and then introduced to the exhaust turbine 104. The reason to introduce a part of the sub- or super-critical water to the exhaust turbine is the same as that in FIG.7, and explanation is omitted. The controller 22 in FIG.8 controls the opening of the bypass control valve 123a attached to the bypass pipe 123 to control the rotation speed of the exhaust turbine 104 to control the temperature and pressure of said sub- or super-critical water to the range cited before in addition to the function explained with reference to FIG.6.

FIG. 9 shows a schematic configuration of a sixth embodiment of the system (feedback-compound system) according to the present invention. In this embodiment, a generator 111a is connected to the exhaust turbine 103 in FIG.7, and to the exhaust collector 102 are supplied fuel and a part of the compressed air which is compressed in the compressor 105 to be supplied to the engine by way of a bypass pipe 126 equipped with a bypass control vale 126a. As the exhaust gas in the exhaust collector 102 contains a large portion of air not consumed for the combustion in the cylinder, additional fuel injected into the exhaust collector 102 can be burnt therein. As a result the temperature of the exhaust gas flowing into the turbine 104 is increased, accordingly the output of the turbine 104 is increased to drive the generator 111a together with the compressor 105. Supply of a part of the compressed air is done as necessary, the flow rate of which is controlled by the bypass control valve 126a. In the case of this embodiment, the energy of the exhaust gas from the turbine 104 is increased due to said additional burning and increased amount of sub- or super-critical water may be generated in the heat exchanger 106, so a part thereof is introduced to the exhaust collector to allow the correct amount of sub- or super-critical water to be injected into the cylinder. The controller 22 in FIG.9 controls the opening of the bypass control valve 123a attached to the bypass pipe 123 and the bypass control vale 126a to control the rotation speed of the exhaust turbine 104 to control the temperature and pressure of said sub- or super-critical water to the range cited before in addition to the function explained with reference to FIG.6.

FIG.10 shows a schematic configuration of a seventh embodiment of the system (feedback-compound system) according to the present invention. In the case of this embodiment, an independent turbine 104a connected with a generator 111 is provided and the generator 111a connected to the exhaust turbine 104 in FIG.9 is eliminated. Other than this is the same to the case with FIG.9. The independent turbine is supplied with the cylinder exhaust gas bypassed from the exhaust collector 102 by way of a bypass pipe 122. In the case of an independent turbine, the freedom of design increases and rather cost down is achieved.

Not only diesel engines but also gas engines, petrol engines are applicable to the present invention, however, particularly medium/large diesel and gas engines are preferably and effectively applied.

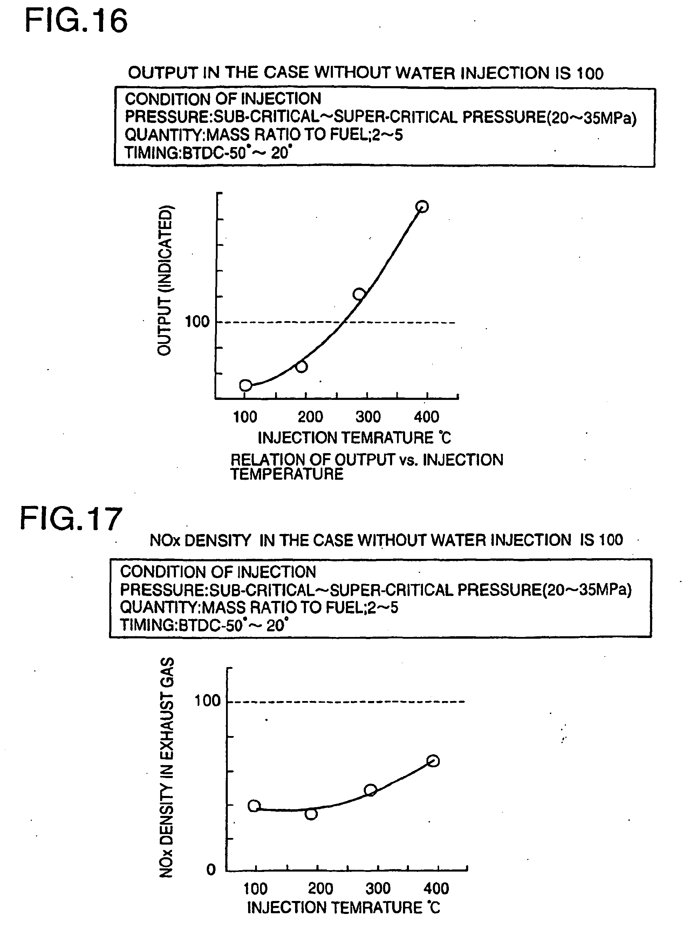

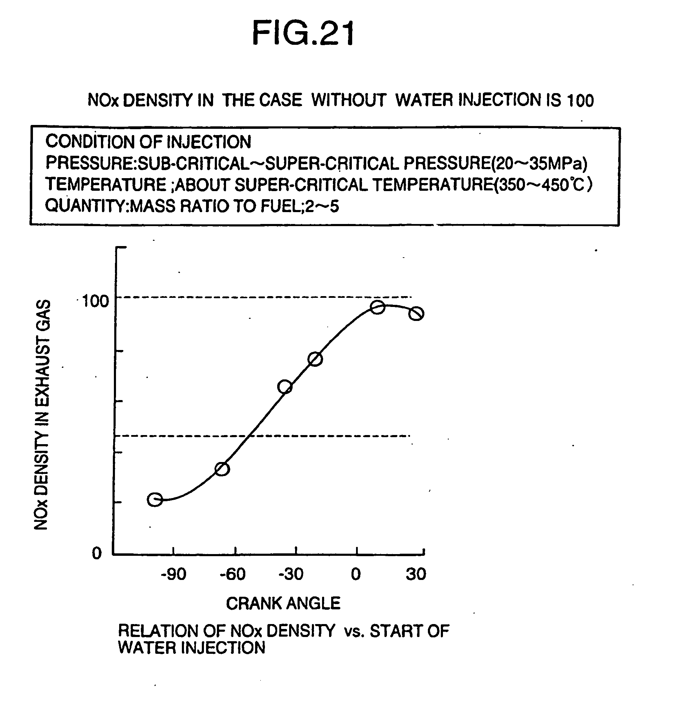

Next, The influences of the temperature and injection timing of sub- or super-critical water are shown in FIG.16 ∼ FIG.21. These are the test result performed with a diesel engine of cylinder bore of 170 mm, stroke of 180 mm, rotation speed of 1500 rpm, and configured as shown in FIG.2. The influences are shown as the ratio when sub- or super-critical water is injected to when not injected.

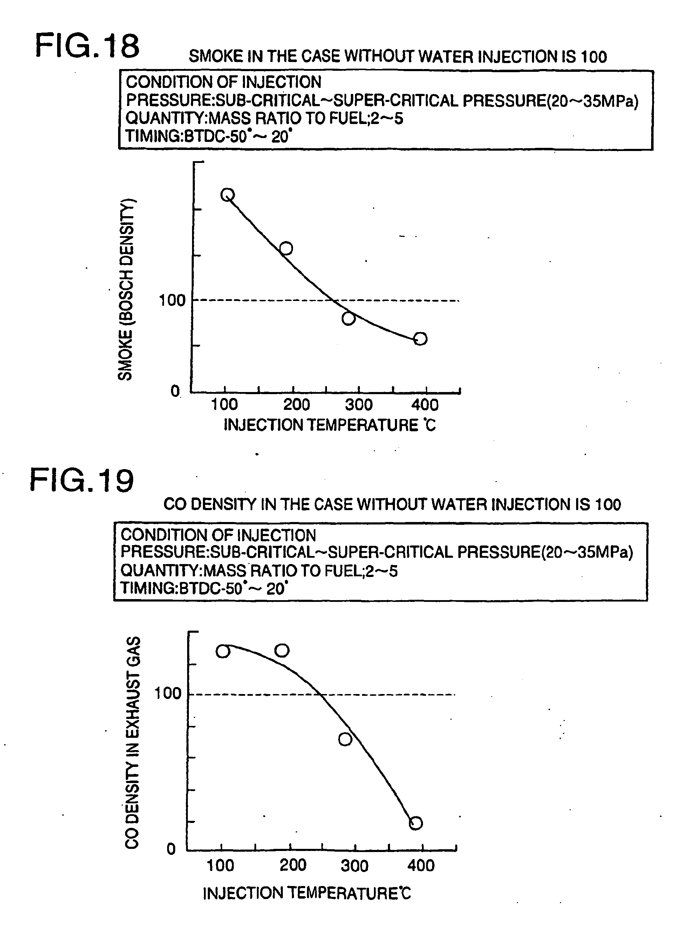

FIG.16 shows the output, FIG.17 shows the NOx density in the exhaust gas, FIG.18 shows the smoke density in the exhaust gas, and FIG.19 shows the CO density in the exhaust gas respectively relative to the temperature of the sub- or super-critical water injected into the cylinder.

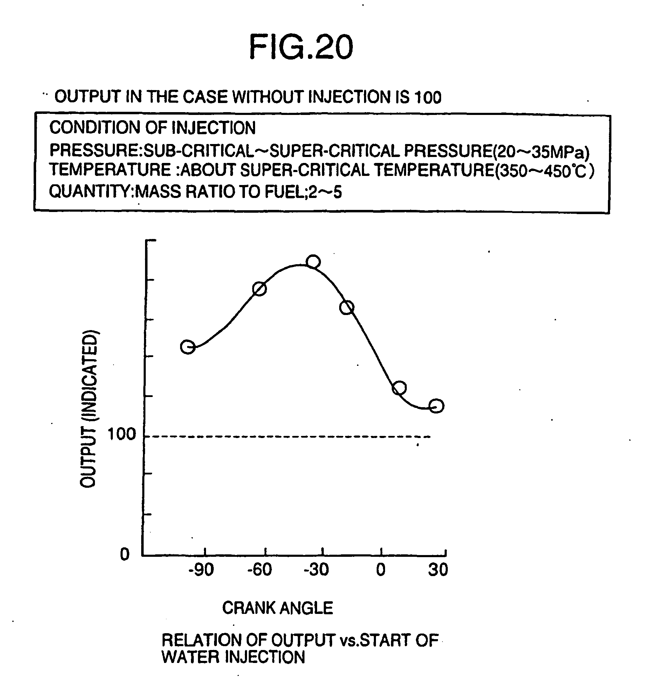

FIG.20 shows the output, and FIG.21 shows the NOx density in the exhaust gas respectively relative to the injection timing of sub- or super-critical water into the cylinder. Broken lines in these figures indicate when sub- or super-critical water is not injected.

In FIG.16 showing relation between output and injection temperature of sub- or super-critical water, improvement in output is recognized in temperature range above 250 °C. In super-critical temperature range the increase in output reaches 5 % or over. In FIG.17, NOx density is reduced all over the tested temperature range. It is thought that the reduction in NOx is achieved owing to the effect of formation of homogeneous phase with super-critical water in temperature range near 400 °C, and that the reduction when the injection temperature is low as about 250 °C is due to the cooling effect of local high temperature points or regions. However, considering the result of FIG. 16 together, the injection temperature of sub- or super-critical water is preferable to be 250 °C or higher.

In FIG.18, improvement in smoke density is also seen in temperature range above 250 - 300 °C. In FIG.19, also improvement is realized in temperature range above 250 °C. Particularly, CO density is reduced to below 20% of that when sub- or super-critical water is not injected, so it is recognized that combustion efficiency is largely improved.

Up to this point relations of output and emissions relative to the injection temperature of sub- or super-critical water have been shown, and only NOx is improved all over the tested temperature range of 100 - 400 °C. Injection of sub- or super-critical water of above 250 °C is required to attain improvement in output, CO, and smoke.

In FIG.20 showing the relation of output relative to the injection timing of sub- or super-critical water, the increase of output is maximum when the start of injection of sub- or super-critical water is 60° ∼ 30° before the top dead center. In FIG.21, the faster the start of injection of sub- or super-critical water, the greater the improvement in NOx is.

Therefore, concerning the start of injection of sub- or super-critical water, it is preferable that the start of the injection is at 90°∼ 5° before the top dead center, particularly at 60°∼ 30° before the top dead center, that is before fuel is injected in the compression stroke, when placing a premium on output. When putting a premium on NOx, it is preferable that the start of the injection is as earlier before the top dead center as possible in the range cited above.

### EFFECTS OF THE INVENTION

The present invention is implemented as has been explained in the foregoing, and is effective as described in the following:

By injecting into the cylinder sub-critical water of pressure of between 18MPa and 22. 1 MPa (critical pressure) and temperature of between 250 °C and 580 °C or super-critical water in the range of 90° before the top dead center and 30° after the top dead center so that the air excess ratio at the maximum output is 1 ∼ 2.5 with increased fuel injection, the fuel supply is allowed to be increased while keeping the maximum combustion temperature at a conventional level (1600 ∼ 2000 °C) resulting in increased output and thermal efficiency;

Emissions such as NOx, smoke, etc. can be reduced due to the active reaction of the sub- or super-critical water injected into the cylinder; and

By composing a feedback-compound system in which sub- or super-critical water is generated through the heat exchange of water with the exhaust gas of which the mass and specific heat are increased owing to the injection of the sub- or super-critical water, lightweight, compact, and high output compound system can be composed without providing a steam turbine as is the case with conventional series-combined system.

## Claims

1. A method of operating a reciprocating internal combustion engine in which liquid or gaseous fuel such as petroleum group fuel, hydrogen, natural gas, alcohol, etc. is burned and the combustion gas works as working fluid, wherein the start timing of an injection into a cylinder of sub-critical water at a pressure of between 18 MPa and 22.1 MPa (critical pressure) and a temperature of between 250°C and 580°C or super-critical water hereafter referred to as sub- or super-critical water, with at least one sub- or super-critical water injection nozzle, is controlled to be at the same time of the fuel injection, with a fuel injection nozzle, or before in the compression stroke, and in the range of between 90° before the top dead center and 30° after the top dead center and so that the sub- or super-critical water penetrates the air in the cylinder and interferes with the spray of injected fuel, and the amount of the fuel injection into the cylinder is controlled so that the air excess ratio at the maximum output is 1 to 2.5.

2. A method of operating a reciprocating internal combustion engine injected with sub- or super-critical water according to claim 1, wherein said sub- or super-critical water is generated by heating water through heat exchange with the exhaust gas of the engine.

3. A method of operating a reciprocating internal combustion engine injected with sub- or super-critical water according to claim 2, wherein the temperature and pressure of said sub- or super-critical water is adjusted by controlling the temperature of exhaust gas at turbine exit of the exhaust turbocharger and the pressure of the water supplied to the apparatus for producing sub- or super-critical water.

4. A method of operating a reciprocating internal combustion engine injected with sub- or super-critical water according to claim 2, wherein the temperature and pressure of said sub- or super-critical water is adjusted by controlling the flow rate of the exhaust gas bypassed from the upstream side of the exhaust turbine before it enters the turbine to be supplied to the apparatus for producing sub- or super-critical water and the pressure of the water supplied to the apparatus.

5. A method according to any one of the preceding claims, wherein the amount of fuel injected into the cylinder is controller so that the excess air ratio at the maximum output, is 1 to 2.5 with the maximum combustion temperature of 1600°C to 2000°C.

6. A system of a reciprocating internal combustion engine in which liquid or gaseous fuel such as petroleum group fuel, hydrogen, natural gas, alcohol, etc. is burned and the combustion gas works as working fluid, wherein the system comprises:
a means for producing sub-critical water of pressure between 18 MPa and 22.1 MPa, critical pressure, and temperature between 250°C and 580 °C or super-critical water, hereafter referred to as sub- or super-critical water,
a means for starting injection of sub- or super-critical water, with at least one sub- or super-critical water injection nozzle (21), into the cylinder at the same time with the fuel injection, with a fuel injection nozzle (16), or before in the compression stroke, and in the range of between 90° before the top dead center and 30° after the top dead center and so that the sub- or super-critical water penetrates the air in the cylinder and interferes with the spray of injected fuel, and
a means for controlling the fuel injection quantity so that the excess air ratio at the maximum output is 1 to 2.5 with the maximum combustion temperature of 1600 to 2000 °C.

7. A system of a reciprocating internal combustion engine according to claim 6, wherein said means for producing sub- or super-critical water is an exhaust gas/H₂O heat exchanger provided downstream the exhaust turbine of the exhaust turbocharger of the reciprocating internal combustion engine.

8. A system of a reciprocating internal combustion engine according to claim 6, wherein a control means is provided to adjust the flow rate of exhaust gas and the pressure of H₂O supplied to the heat exchanger for producing the sub- or super-critical water of said range of temperature and pressure.

9. A system of a reciprocating internal combustion engine according to claim 6, wherein a means for changing the exhaust gas temperature at the exit of the turbine of the exhaust turbocharger is installed instead of the means to adjust the flow rate of exhaust gas cited in claim 8.

10. A system of a reciprocating internal combustion engine according to claim 7, wherein a bypass passage equipped with a bypass adjusting means is provided for supplying to the heat exchanger a part of the exhaust gas before it enters the exhaust turbine of the exhaust turbocharger.

11. A system of a reciprocating internal combustion engine according to claim 7, wherein a second means for producing sub- or super-critical water is provided in addition to said exhaust gas/H₂O heat exchanger for injecting the sub- or super-critical water generated by said second means into the cylinder of the internal combustion engine at the start of operation of engine.

12. A system of a reciprocating internal combustion engine according to claim 6, wherein a part of the sub- or super-critical water generated by said means for producing sub- or super-critical water is returned to the exhaust side of the engine.

13. A system of a reciprocating internal combustion engine according to any one of claims 6 to 11, wherein fuel is supplied to the exhaust pipe of the engine located upstream said means for producing sub- or super-critical water to be burned in the exhaust pipe.

14. A system of a reciprocating internal combustion engine according to claim 13, wherein fuel and a part of the air compressed in the compressor of the exhaust turbocharger are supplied to the exhaust pipe of the engine located upstream said means for producing sub- or super-critical water to burn the fuel in the exhaust pipe.

## Patentansprüche

1. Verfahren zum Betreiben einer Hubkolbenmaschine, in der ein flüssiger oder gasförmiger Brennstoff wie etwa ein Brennstoff aus der Petroleumgruppe, Wasserstoff, Erdgas, Alkohol usw. verbrannt wird und das Verbrennungsgas als Arbeitsfluid arbeitet, wobei der Starttakt der Einspritzung in einen Zylinder mit unterkritischem Wasser bei einem Druck von zwischen 18 MPa und 22,1 MPa (kritischer Druck) und einer Temperatur von zwischen 250°C und 580°C oder überkritisches Wasser (im Anschluss als unter- oder überkritisches Wasser bezeichnet) mit zumindest einer Einspritzdüse für unter- oder überkritisches Wasser so geregelt wird, dass er zur selben Zeit wie die Brennstoffeinspritzung mit einem Brennstoffeinspritzventil oder vorher im Kompressionshub und im Bereich von zwischen 90° vor dem oberen Totpunkt und 30° nach dem oberen Totpunkt-Zentrum und so erfolgt, dass das unter- oder überkritische Wasser die Luft im Zylinder durchdringt und mit dem Sprühstrahl des eingespritzten Brennstoffs in Wechselwirkung tritt und die Menge der Brennstoffeinspritzung in den Zylinder so gesteuert wird, dass das Luft-Überschussverhältnis bei maximaler Leistung 1 bis 2,5 beträgt.

2. Verfahren zum Betreiben einer Hubkolbenmaschine, in die unter- oder überkritisches Wasser eingespritzt wird, gemäß Anspruch 1, wobei das unter- oder überkritische Wasser durch Erhitzen von Wasser durch Wärmeaustausch mit dem Abgas des Motors erzeugt wird.

3. Verfahren zum Betreiben einer Hubkolbenmaschine, in die unter- oder überkritisches Wasser eingespritzt wird, gemäß Anspruch 2, wobei die Temperatur und der Druck des unter- oder überkritischen Wassers durch Regeln der Temperatur des Abgases an dem Turbinenausgang des Abgas-Turboladers und des Drucks des zur Vorrichtung zum Erzeugen von unter- oder überkritischem Wasser zugeführten Wassers eingestellt wird.

4. Verfahren zum Betreiben einer Hubkolbenmaschine, in die unter- oder überkritisches Wasser eingespritzt wird, gemäß Anspruch 2, wobei die Temperatur und der Druck des unter- oder überkritischen Wassers durch Steuern der Strömungsrate des Abgases, das von der stromaufwärtigen Seite der Abgasturbine bevor es in die Turbine tritt, um zur Vorrichtung zur Erzeugung des unter- oder überkritischen Wassers zugeführt zu werden, umgeleitet wird, und des Drucks des zur Vorrichtung zugeführten Wassers eingestellt wird.

5. Verfahren gemäß einem der voranstehenden Ansprüche, wobei die Menge an den in den Zylinder eingespritzten Brennstoffs so gesteuert wird, dass das Überschuss-Luftverhältnis bei maximaler Leistung 1 bis 2,5 bei einer maximalen Verbrennungstemperatur von 1600°C bis 2000°C beträgt.

6. System zum Betreiben einer Hubkolbenmaschine, in der ein flüssiger oder gasförmiger Brennstoff wie etwa ein Brennstoff der Petroleumgruppe, Wasserstoff, Erdgas, Alkohol usw. verbrannt wird und das Verbrennungsgas als Arbeitsfluid arbeitet, wobei das System umfasst:
Mittel zum Erzeugen unterkritischen Wassers bei einem Druck zwischen 18 MPa und 22,1 MPa kritischem Druck, und einer Temperatur zwischen 250°C und 580°C oder überkritisches Wasser, im Anschluss bezeichnet als unter- oder überkritisches Wasser,
Mittel zum Starten des Einspritzens von unter- oder überkritischem Wasser mit zumindest einer Einspritzdüse (21) für unter- oder überkritisches Wasser in den Zylinder zur gleichen Zeit wie die Brennstoff-Einspritzung mit einer Brennstoff-Einspritzdüse (16), oder vor dem Kompressions-Hub und im Bereich von zwischen 90° vor dem oberen Totpunkt und 30° nach dem oberen Totpunkt-Zentrum, und derart, dass das unter- oder überkritische Wasser die Luft im Zylinder durchsetzt und mit dem Sprühstrahl eingespritzten Brennstoffs in Wechselwirkung tritt, und
Mittel zum Steuern der Brennstoff-Einspritzmenge, so dass das Überschuss-Luftverhältnis bei maximaler Leistung 1 bis 2,5 bei einer maximalen Verbrennungstemperatur von 1600 bis 2000°C beträgt.

7. System zum Betreiben einer Hubkolbenmaschine gemäß Anspruch 6, wobei das Mittel zum Erzeugen unter- oder überkritischen Wassers ein Abgas/H₂O-Wärmetauscher ist, der stromabwärts der Abgasturbine des Abgas-Turboladers der Hubkolbenmaschine vorgesehen ist.

8. System zum Betreiben einer Hubkolbenmaschine gemäß Anspruch 6, wobei ein Steuerungsmittel dazu vorgesehen ist, die Strömungsrate des Abgases und den Druck von H₂O, das zum Wärmetauscher zur Erzeugung unter- oder überkritischen Wassers in dem Bereich Temperatur und des Drucks zugeführt wird, vorgesehen ist.

9. System zum Betreiben einer Hubkolbenmaschine gemäß Anspruch 6, wobei ein Element zum Verändern der Abgastemperatur am Austritt der Turbine des Abgas-Turboladers anstelle des Mittels zur Einstellung der Strömungsrate des Abgases, wie in Anspruch 8 beschrieben, installiert, ist.

10. System zum Betreiben einer Hubkolbenmaschine gemäß Anspruch 7, wobei ein mit einem Umleitungs-Einstellungselement ausgestatteter Umgehungs-Durchgang zur Zufuhr eines Teils des Abgases zum Wärmetauscher, bevor dieses in die Abgasturbine des Abgas-Turboladers eintritt, vorgesehen ist.

11. System zum Betreiben einer Hubkolbenmaschine gemäß Anspruch 7, wobei ein zweites Element zur Erzeugung unter- oder überkritischen Wassers zusätzlich zu dem Abgas/H₂O-Wärmetauscher zur Einspritzung des durch dieses zweite Element erzeugten unter- oder überkritischen Wassers im Zylinder der Hubkolbenmaschine zu Beginn des Betriebs der Maschine vorgesehen ist.

12. System zum Betreiben einer Hubkolbenmaschine gemäß Anspruch 6, wobei ein Teil des von dem Element zur Erzeugung unter- oder überkritischen Wassers erzeugten unter- oder überkritischen Wassers zur Abgasseite der Maschine zurückgeführt wird.

13. System zum Betreiben einer Hubkolbenmaschine gemäß einem der Ansprüche 6 bis 11, wobei der Brennstoff zum Abgasrohr der Maschine zugeführt wird, das stromaufwärts des Mittels zur Erzeugung unter- oder überkritischen Wassers, welches in dem Abgasrohr verbrannt werden soll, platziert ist.

14. System zum Betreiben einer Hubkolbenmaschine gemäß Anspruch 13, wobei der Brennstoff und ein Teil der im Kompressor des Abgas-Turboladers verbrauchten Luft zum Abgasrohr der Maschine zugeführt wird, welches stromaufwärts des Elements zur Erzeugung unter- oder überkritischen Wassers zur Verbrennung des Brennstoffs im Abgasrohr platziert ist.

## Revendications

1. Procédé de mise en oeuvre d'un moteur alternatif à combustion interne dans lequel un carburant liquide ou gazeux comme un carburant du groupe du pétrole, de l'hydrogène, du gaz naturel, de l'alcool, etc., est brûlé et le gaz de combustion fonctionne comme un fluide de travail, dans lequel la synchronisation de début d'une injection dans un cylindre d'eau sous-critique à une pression comprise entre 18 MPa et 22,1 MPa (pression critique) et une température comprise entre 250 °C et 580 °C ou d'eau super-critique, mentionnées ci-après en tant qu'eau sous- ou super-critique, avec au moins une buse d'injection d'eau sous- ou super-critique, est maîtrisée pour avoir lieu en même temps que l'injection de carburant, avec une buse d'injection de carburant, ou avant d'être dans la course de compression, et dans la plage comprise entre 90° avant le point mort haut et 30° après le point mort haut et de sorte que l'eau sous- ou super-critique pénètre l'air dans le cylindre et interfère avec la pulvérisation de carburant injecté, et la quantité d'injection de carburant dans le cylindre est maîtrisée de sorte que le rapport d'air en excès à la sortie maximale est compris entre 1 et 2,5.

2. Procédé de mise en oeuvre d'un moteur alternatif à combustion interne injecté avec de l'eau sous- ou super-critique selon la revendication 1, dans lequel ladite eau sous- ou super-critique est produite en chauffant de l'eau par l'intermédiaire d'un échange de chaleur avec les gaz d'échappement du moteur.

3. Procédé de mise en oeuvre d'un moteur alternatif à combustion interne injecté avec de l'eau sous- ou super-critique selon la revendication 2, dans lequel la température et la pression de ladite eau sous- ou super-critique sont ajustées en maîtrisant la température des gaz d'échappement au niveau de la sortie de turbine du turbocompresseur d'échappement et la pression de l'eau fournie à l'appareil pour produire de l'eau sous- ou super-critique.

4. Procédé de mise en oeuvre d'un moteur alternatif à combustion interne injecté avec de l'eau sous- ou super-critique selon la revendication 2, dans lequel la température et la pression de ladite eau sous- ou super-critique sont ajustées en maîtrisant le débit des gaz d'échappement ayant contourné le côté amont de la turbine d'échappement avant qu'ils ne pénètrent dans la turbine pour être fournis à l'appareil pour produire de l'eau sous- ou super-critique et la pression de l'eau fournie à l'appareil.

5. Procédé selon l'une quelconque des revendications précédentes, dans lequel la quantité de carburant injecté dans le cylindre est maîtrisée de sorte que le rapport d'air en excès à la sortie maximale est compris entre 1 et 2,5 avec la température de combustion maximale de 1 600 °C à 2 000 °C.

6. Système d'un moteur alternatif à combustion interne dans lequel du carburant liquide ou gazeux comme un carburant du groupe du pétrole, de l'hydrogène, un gaz naturel, de l'alcool, etc., est brûlé et le gaz de combustion fonctionne comme un fluide de travail, dans lequel le système comprend :
un moyen pour produire de l'eau sous-critique à une pression comprise entre 18 MPa et 22,1 MPa, pression critique, et à une température comprise entre 250 °C et 580 °C ou de l'eau super-critique, mentionnées ci-après en tant qu'eau sous- ou super-critique,
un moyen pour démarrer l'injection d'eau sous- ou super-critique, avec au moins une buse d'injection d'eau sous- ou super-critique (21), dans le cylindre en même temps que l'injection de carburant, avec une buse d'injection de carburant (16), ou avant dans la course de compression, et dans la plage comprise entre 90° avant le point mort haut et 30° après le point mort haut et de sorte que l'eau sous- ou super-critique pénètre l'air dans le cylindre et interfère avec la pulvérisation de carburant injecté, et
un moyen pour commander la quantité d'injection de carburant de sorte que le rapport d'air en excès à la sortie maximale est compris entre 1 et 2,5 avec la température de combustion maximale de 1 600 à 2 000 °C.

7. Système d'un moteur alternatif à combustion interne selon la revendication 6, dans lequel ledit moyen pour la production d'eau sous- ou super-critique est un échangeur thermique gaz d'échappement / H₂O disposé en aval de la turbine d'échappement du turbocompresseur d'échappement du moteur alternatif à combustion interne.

8. Système d'un moteur alternatif à combustion interne selon la revendication 6, dans lequel un moyen de commande est prévu pour ajuster le débit des gaz d'échappement et la pression de H₂O fournis à l'échangeur thermique pour produire de l'eau sous- ou super-critique auxdites plages de températures et de pressions.

9. Système d'un moteur alternatif à combustion interne selon la revendication 6, dans lequel un moyen pour changer la température des gaz d'échappement au niveau de la sortie de la turbine du turbocompresseur d'échappement est installé au lieu du moyen pour ajuster le débit des gaz d'échappement cité dans la revendication 8.

10. Système d'un moteur alternatif à combustion interne selon la revendication 7, dans lequel un passage de contournement équipé d'un moyen de réglage de contournement est prévu pour fournir à l'échangeur thermique une partie des gaz d'échappement avant qu'ils ne pénètrent dans la turbine d'échappement du turbocompresseur d'échappement.

11. Système d'un moteur alternatif à combustion interne selon la revendication 7, dans lequel un second moyen pour produire de l'eau sous- ou super-critique est prévu en plus dudit échangeur thermique gaz d'échappement / H₂O pour injecter l'eau sous- ou super-critique produite par ledit second moyen dans le cylindre du moteur à combustion interne au début du fonctionnement du moteur.

12. Système d'un moteur alternatif à combustion interne selon la revendication 6, dans lequel une partie de l'eau sous- ou super-critique produite par ledit moyen pour produire de l'eau sous- ou super-critique est renvoyée au côté échappement du moteur.

13. Système d'un moteur alternatif à combustion interne selon l'une quelconque des revendications 6 à 11, dans lequel du carburant est fourni au pot d'échappement du moteur, situé en amont dudit moyen pour produire de l'eau sous- ou super-critique, pour être brûlé dans le pot d'échappement.

14. Système d'un moteur alternatif à combustion interne selon la revendication 13, dans lequel du carburant et une partie de l'air comprimé dans le compresseur du turbocompresseur d'échappement sont fournis au pot d'échappement du moteur situé en amont dudit moyen pour produire de l'eau sous- ou super-critique pour brûler le carburant dans le pot d'échappement.
